# EUROPÄISCHE PATENTANMELDUNG

(11) **EP 4 814 353 A1**
(43) Veröffentlichungstag der Anmeldung: **30.09.2026**
(21) Anmeldenummer: 25175988.2
(22) Anmeldetag: 13.05.2025
(51) Int. Cl.: F16K 15/02, F04B 39/10, F04B 53/10, F16K 17/04, F16K 31/08

(54) **RÜCKSCHLAGVENTIL, VENTILANORDNUNG UND HYDRAULIKSYSTEM**

(30) Priorität: 28.03.2025 DE 202025101698 U
(71) Anmelder: Suttner GmbH, 32657 Lemgo (DE)
(72) Erfinder: MERTIN, Iwan, 32049 Herford (DE)
(74) Vertreter: Von Rohr Patentanwälte Partnerschaft mbB

(57) **Zusammenfassung**

Die vorliegende Erfindung betrifft ein Rückschlagventil aufweisend einen Ventilsitz (2), ein Ventilelement (4) und zwei Magnete (8, 9), wobei die Magnete (8, 9) so angeordnet sind, dass eine Abstoßungskraft der Magnete (8, 9) in Richtung des Ventilsitzes (2) auf das Ventilelement (4) wirkt, sowie eine Ventilanordnung und ein Hydrauliksystem hiermit.

## Beschreibung

Die vorliegende Erfindung betrifft ein Rückschlagventil sowie eine Ventilanordnung und ein Hydrauliksystem mit dem Rückschlagventil.

Ein Rückschlagventil (auch Check Valve genannt) ist ein automatisch arbeitendes Ventil, das den Durchfluss von Fluiden (Wasser, Reinigungsflüssigkeiten, Hydraulikflüssigkeiten, Luft, Gasen) nur in eine Richtung zulässt und in der Gegenrichtung selbstständig verhindert. Es dient also dem Rückfluss-Schutz.

Rückschlagventile der in Rede stehenden Art weisen einen Ventilsitz auf, der in einem Gehäuse mit zwei Anschlüssen (Ein- und Auslass) gebildet sein kann, und ein bewegliches Ventilelement (z. B. Kugel, Teller, Kolben u.dgl.). Optional weisen Rückschlagventile eine Schließeinrichtung wie eine Feder auf, die das Ventilelement in Sperrstellung am Ventilsitz und damit das Rückschlagventil im druckausgeglichenen Zustand geschlossen hält. Es ist jedoch auch möglich, dass das Ventilelement lediglich durch den Fluidstrom oder die Schwerkraft in die Schließstellung bewegbar ist.

Beim Betrieb in Durchflussrichtung (vorwärts) überwindet eine (positive) Druckdifferenz des Fluids in Flussrichtung zwischen Ein- und Auslass die Kraft der Schließeinrichtung und hebt das Ventilelement vom Ventilsitz. Das Fluid kann passieren. Beim Betrieb mit einer (positiven) Druckdifferenz in Sperrrichtung (rückwärts) drückt das Fluid das Ventilelement entgegen der Flussrichtung in den Ventilsitz. Der Durchfluss wird unterbunden.

Bei bekannten Rückschlagventilen wird das Ventilelement oftmals mit einer Feder als Schließeinrichtung aufgebaut. Insbesondere handelt es sich bei der Feder um eine Druckfeder, die derart Druck auf das Ventilelement ausübt, dass es - bei druckausgeglichenem Zustand zwischen Einlass und Auslass des Rückschlagventils - in den zum Ventilsitzelement korrespondierenden Ventilsitz gedrückt wird und damit das Rückschlagventil schließt.

Insbesondere bei zahlreichen, schnellen und/oder hochfrequenten Öffnungs- und Schließbewegungen hat es sich jedoch gezeigt, dass der Einsatz von Federn zu Einschränkungen in der Lebensdauer führt, da Federn bei entsprechend starker Beanspruchung die Tendenz haben, zu ermüden und gegebenenfalls sogar zu brechen.

Aufgabe der vorliegenden Erfindung ist es daher, ein robusteres bzw. langlebigeres Rückschlagventil sowie eine Ventilanordnung und ein Hydrauliksystem hiermit anzugeben.

Diese Aufgabe wird durch ein Rückschlagventil gemäß Anspruch 1, durch eine Ventilanordnung gemäß Anspruch 9 oder durch ein Hydrauliksystem gemäß Anspruch 11 gelöst. Vorteilhafte Weiterbildungen sind Gegenstand der Unteransprüche.

Ein erster Aspekt der vorliegenden Erfindung betrifft ein Rückschlagventil aufweisend einen Ventilsitz, ein Ventilelement und zwei Magnete. Die Magnete sind so angeordnet, dass eine Abstoßungskraft der Magnete in Richtung des Ventilsitzes auf das Ventilelement wirkt.

Insbesondere werden also zwei Magnete verwendet, die sich gegenseitig abstoßen bzw. so angeordnet sind, dass sie sich abstoßen und dadurch eine Abstoßungskraft erzeugt wird. Die Abstoßungskraft wird genutzt, um im druckausgeglichenen Zustand ein Schließen des Rückschlagventils zu bewirken. Die Magnete bilden also die Schließeinrichtung.

Die Abstoßungskraft wird vorzugsweise dadurch erzeugt, dass die Magnete mit gleichen Polen zueinander gewandt angeordnet sind, sodass diese sich abstoßen. Darüber hinaus ist einer der Magnete vorzugsweise mit dem Ventilelement verbunden und der andere der Magnete ist befestigt oder zumindest derart abgestützt, dass die Abstoßungskraft das Ventilelement in Richtung des Ventilsitzes drückt.

In vorteilhafter Weise hat es sich gezeigt, dass durch die Verwendung der sich abstoßenden Magnete zum Schließen von Rückschlagventilen diese Rückschlagventile ausgesprochen langlebig und zuverlässig sind, auch wenn ein Fluidstrom durch die Rückschlagventile geleitet oder der Fluidstrom durch die Rückschlagventile gesteuert werden, der hochfrequente Schwingungen bzw. Druckwellen oder Druckspitzen aufweist.

Die Verwendung der Abstoßungskraft sich abstoßender Magnete zum Schließen eines Rückschlagventils, wenn ein Fluidstrom durch die Rückschlagventile geleitet oder der Fluidstrom durch die Rückschlagventile gesteuert wird, der hochfrequente Schwingungen bzw. Druckwellen oder Druckspitzen aufweist, stellt einen auch unabhängig realisierbaren Aspekt der vorliegenden Erfindung dar.

Bei den Magneten handelt es sich vorzugsweise um Permanentmagnete. Die Magnete sind vorzugsweise flüssigkeitsdicht, insbesondere wasserdicht, gekapselt. Hierzu können Sie - beispielsweise mit einem Kunststoff - ummantelt sein.

Ein weiterer Aspekt der vorliegenden Erfindung, der auch unabhängig realisiert werden kann, betrifft eine Ventilanordnung aufweisend ein vorschlagsgemäßes Rückschlagventil sowie ein Überdruckventil. Insbesondere handelt es sich bei der Ventilanordnung um ein Umlaufventil, das mittels des Rückschlagventils einen Rückfluss des Fluids von einer Abgabevorrichtung zu einer Pumpe unterbindet, während das Überdruckventil, wenn es ab einem bestimmten Druck-Schwellwert anspricht, das von der Pumpe stammende Fluid durch einen Bypass ableitet.

Ein besonders vorteilhafter Anwendungsfall für das vorschlagsgemäße Rückschlagventil ist ein Hochdruckreiniger, bei dem das Rückschlagventil oder die Ventilanordnung zwischen der Pumpe für Reinigungsflüssigkeit und einer Applikationsvorrichtung wie einer Sprühlanze, Düse, Pistole oder sonstigen Abgabevorrichtung für die Reinigungsflüssigkeit angeordnet ist.

In diesem Zusammenhang ermöglicht das vorschlagsgemäße Rückschlagventil, das Zurückfließen von Reinigungsflüssigkeit in Richtung der Pumpe zu verhindern, wobei das Rückschlagventil und damit auch die gesamte Ventilanordnung selbst bei hochfrequenten Schwingungen bzw. Druckwellen, wie sie durch Hochdruckpumpen von Hochdruckreinigern erzeugt werden können, aufgrund des Aufbaus mit den Magneten ausgesprochen robust und langlebig ist.

Ein weiterer Aspekt der vorliegenden Erfindung betrifft ein Hydrauliksystem, vorzugsweise ein Wasserhydrauliksystem, mit dem vorschlagsgemäßen Rückschlagventil. Bei dem Hydrauliksystem kann es sich um eine Pumpe handeln oder es kann eine Pumpe aufweisen, die mit einem oder mehreren vorschlagsgemäßen Rückschlagventilen aufgebaut ist.

Beispielsweise handelt es sich um eine Kolbenpumpe, die jeweils ein Rückschlagventil für einen bzw. im Einlass (Pumpenanschluss) und Auslass (Abgabeanschluss) der Pumpe aufweist. Hierbei sind die Rückschlagventile vorzugsweise so angeordnet, dass eines der Rückschlagventile am Einlass den Zufluss von Flüssigkeit bzw. Reinigungsflüssigkeit zum Kolben einer Zylinder-Kolben-Einheit ermöglicht und das andere der Rückschlagventile am Auslass eine Abgabe der Flüssigkeit bzw. Reinigungsflüssigkeit ermöglicht, während beide Rückschlagventile in die entgegengesetzte Richtung den Fluidstrom jeweils sperren.

Weitere Vorteile und Eigenschaften der vorliegenden Erfindung ergeben sich aus den Ansprüchen und der nachfolgenden Beschreibung bevorzugter Ausführungsbeispiele anhand der Zeichnung.

Es zeigt:
- Fig. 1: einen schematischen Querschnitt eines geöffneten vorschlagsgemäßen Rückschlagventils;
- Fig. 2: einen schematischen Querschnitt eines geschlossenen vorschlagsgemäßen Rückschlagventils;
- Fig. 3: eine Explosionsdarstellung des vorschlagsgemäßen Rückschlagventils aus unterschiedlichen Perspektiven;
- Fig. 4: einen Querschnitt einer vorschlagsgemäßen Ventilanordnung;
- Fig. 5: einen weiteren Querschnitt der vorschlagsgemäßen Ventilanordnung gemäß Fig. 4 mit geänderter Schnittebene; und
- Fig. 6: ein schematisches Blockschaltbild eines vorschlagsgemäßen Hydrauliksystems.

Für dieselben oder für ähnliche Teile werden im Folgenden die gleichen Bezugszeichen verwendet, wobei gleiche oder ähnliche Eigenschaften und Vorteile erreicht werden können, auch wenn von einer wiederholten Erläuterung abgesehen worden ist.

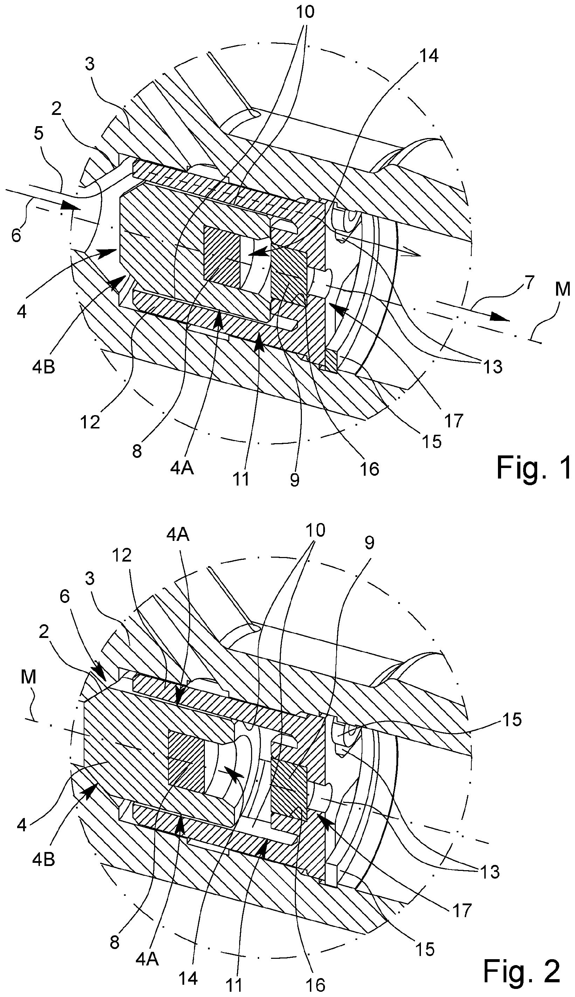

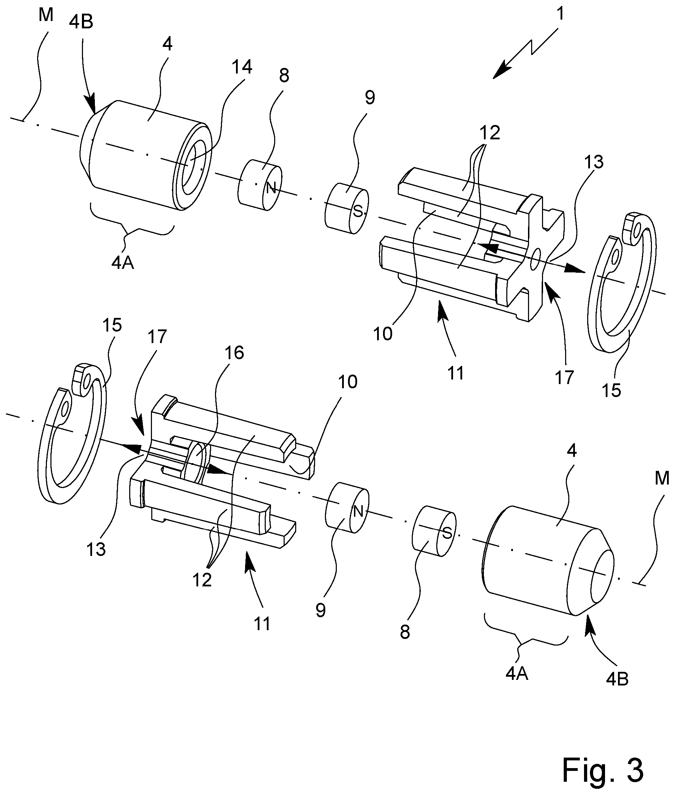

Fig. 1 und Fig. 2 zeigen einen schematischen Querschnitt eines vorschlagsgemäßen Rückschlagventils 1, einerseits im geöffneten und andererseits im geschlossenen Zustand. Fig. 3 ist eine Explosionsdarstellung des vorschlagsgemäßen Rückschlagventils 1 aus unterschiedlichen Perspektiven.

Das vorschlagsgemäße Rückschlagventil 1 weist einen Ventilsitz 2 auf, der vorliegend durch ein Gehäuse 3 gebildet ist. Darüber hinaus weist das vorschlagsgemäße Rückschlagventil 1 ein Ventilelement 4 auf. Das Ventilelement 4 ist beweglich, sodass es durch Anlage an dem Ventilsitz 2 eine Fluidpassage 5 zwischen einem Einlass 6 und einem Auslass 7 verschließen kann und durch Abrücken von dem Ventilsitz 2 die Fluidpassage 5 zwischen dem Einlass 6 und dem Auslass 7 freigibt, sodass Fluid vom Einlass 6 zum Auslass 7 fließen kann. Die Fluidpassage 5, der Einlass 6 und/oder der Auslass 7 kann/können durch das Gehäuse 3 gebildet sein.

Das Rückschlagventil 1 weist vorzugsweise zwei Magnete 8, 9 auf. Die Magnete 8, 9 erzeugen eine Abstoßungskraft, die in Richtung des Ventilsitzes 2 auf das Ventilelement 4 wirkt. Die Magnete 8, 9 verspannen mit anderen Worten das Ventilelement 4 (zumindest in einem druckausgeglichenen Zustand des Rückschlagventils 1) gegen den Ventilsitz 2. Druckausgeglichen bedeutet, dass der Fluiddruck am Einlass 6 dem Fluiddruck am Auslass 7 entspricht.

Zur eingänglicheren Differenzierung zwischen den Magneten 8, 9 werden im Folgenden ein dem Ventilelement 4 zugeordneter bzw. hiermit verbundener der Magnete 8, 9 auch Ventilelementmagnet 8 und der diesen abstoßende, andere der Magnete 8, 9 Abstoßungsmagnet 9 genannt.

Die Magnete 8, 9 können identisch oder zumindest im Wesentlichen gleich oder jedenfalls ähnlich ausgebildet bzw. geformt sein und unterscheiden sich jedenfalls in der Ausrichtung ihrer Polarität, die nämlich bevorzugt gegensätzlich ist. Die Magnete 8, 9 sind also entgegengesetzt gepolt, sodass sie sich abstoßen. Sie bilden vorzugsweise ein Magnetpaar, korrespondieren zueinander, und/oder sind gegenüber voneinander und/oder komplementär zueinander angeordnet.

Hierbei ist der Ventilelementmagnet 8 dem beweglichen Ventilelement 4 zugeordnet, während der Abstoßungsmagnet 9 festgelegt sein kann. Insbesondere ist der Ventilelementmagnet 8 mit dem Ventilelement 4 verbunden. Der Abstoßungsmagnet 9 ist dem Ventilsitz 2 zugeordnet, vorzugsweise relativ zum Ventilsitz 2 unbeweglich, an dem Gehäuse 3, einer Führung und/oder dergleichen gehalten.

Der Ventilelementmagnet 8 stößt sich von dem - vorzugsweise unmittelbar oder mittelbar mit dem Ventilsitz 2 verbundenen - Abstoßmagnet 9 ab (oder umgekehrt).

Der Abstoßungsmagnet 9 ist vorzugsweise auf einer dem Ventilsitz 2 abgewandten Seite des Ventilelements 4 angeordnet und relativ zu dem Ventilsitz 2 (unbeweglich) festgelegt. Schließlich sind die Magnete 8, 9 vorzugsweise derart zueinander angeordnet, dass eine Abstoßungskraft dieser voneinander das Ventilelement 4 in Richtung des Ventilsitzes 2 drückt.

Die Abstoßungskraft drückt also das Ventilelement 4 in Richtung des Ventilsitzes 2 bzw. an den Ventilsitz 2 und schließt damit das Rückschlagventil 1 (im druckausgeglichenen Zustand). Mit anderen Worten drückt die Abstoßungskraft das Ventilelement 4 entgegen einer Flussrichtung bzw. in Sperrrichtung des Rückschlagventils 1, die der Richtung vom Einlass 6 zum Auslass 7 entspricht, in Richtung des Ventilsitzes 2.

In vorteilhafter Weise ermöglicht die Verwendung der Abstoßungskraft der Magnete 8, 9 eine Vorspannung des Ventilelements 4 in Richtung des Ventilsitzes 2 ohne mechanische Verformung, insbesondere ohne Einsatz einer Feder oder eines sonstigen mechanischen Spannelements. Das Rückschlagventil 1 ist also bevorzugt federfrei bzw. frei von mechanischen oder zur Spannungserzeugung zu verformenden Spannelementen gebildet. Vorzugsweise sind ausschließlich die Magnete 8, 9 verantwortlich dafür, dass das Ventilelement 4 in Schließrichtung vorgespannt wird oder ist.

Dadurch, dass die magnetische Abstoßungskraft statt einer Feder eingesetzt wird, werden defekte durch Materialermüdung von Federn oder sonstigen mechanischen Spannelementen vermieden. In überraschender Weise hat sich gezeigt, dass hierdurch insbesondere bei Anwendungen, bei denen Fluide mit hochfrequenten Schwingungen bzw. Druckwellen/Druckspitzen durch das Rückschlagventil 1 geleitet bzw. vom Rückschlagventil 1 blockiert werden sollen, eine verbesserte Haltbarkeit erreicht wird.

Vorzugsweise ist mindestens einer, bevorzugt sind beide, der Magnete 8, 9 Permanentmagnete. Weiter ist bevorzugt, dass mindestens einer, bevorzugt beide, der Magnete 8, 9 Neodymmagnete sind. Grundsätzlich können die Magnete 8, 9 jedoch auch andere permanent-magnetisierbare bzw. ferromagnetische Materialien aufweisen oder hieraus gebildet sein, wie Ferrite, Eisen, Kobalt und/oder Nickel.

Der oder die Magnete 8, 9 sind vorzugsweise vor Korrosion geschützt, bevorzugt durch eine Beschichtung bzw. Ummantelung. Mindestens einer, bevorzugt beide, der Magnete 8, 9, ist/sind bevorzugt vollständig, mit einem Polymer, insbesondere PTFE oder Epoxid, beschichtet oder ummantelt. Auf diese oder sonstige Weise ist/sind die Magnete 8, 9 gegen Korrosion geschützt.

Im Darstellungsbeispiel sind die Magnete 8, 9 koaxial zueinander und/oder (symmetrisch) zu einer (gemeinsamen) Mittelachse M bzw. Rotationssymmetrieachse des Ventilelements 4 und/oder Ventilsitzes 2 angeordnet. Die Mittelachse M erstreckt sich vorzugsweise entlang der Richtung, in der das Ventilelement 4 bewegbar bzw. geführt ist.

Das Ventilelement 4 ist vorzugsweise linear bzw. (rein) translatorisch geführt. Das Ventilelement 4 ist also vorzugsweise nur translatorisch in eine Dimension hin und her bewegbar. Hierbei ist das Ventilelement 4 durch Fluiddruck entgegen der Abstoßungskraft der Magnete 8, 9 vom Ventilsitz 2 abrückbar, um die Fluidpassage 5 zu öffnen. Es wird bei druckausgeglichenem Zustand durch die Abstoßungskraft der Magnete 8, 9 an den Ventilsitz 2 gedrückt, wodurch die Fluidpassage 5 bzw. das Rückschlagventil 1 geschlossen wird oder ist.

Eine Beweglichkeit der Magnete 8, 9 zueinander ist - vorzugsweise durch eine Gleitlagerung des Ventilelements 4 - auf eine lineare bzw. translatorische Bewegung beschränkt. Dies ermöglicht einerseits eine zuverlässige Anlage des Ventilelements 4 am Ventilsitz 2 und andererseits verhindert es ein Ausweichen der sich abstoßenden Magnete 8, 9, wodurch im Ergebnis eine besonders zuverlässige Funktion des Rückschlagventils 1 erreicht werden kann.

Im Darstellungsbeispiel ist das Ventilelement 4 durch eine oder mehrere Wandabschnitte 10 geführt und/oder gleitgelagert. Das Ventilelement 4 ist hierbei oder hierdurch vorzugsweise linear geführt.

Die Wandabschnitte 10 sind vorzugsweise mit dem Gehäuse 3 bzw. unmittelbar oder mittelbar dem Ventilsitz 2 verbunden. Alternativ können die Wandabschnitte 10 durch das Gehäuse 3 gebildet sein. Die Wandabschnitte 10 ermöglichen eine Führung bzw. translatorische/lineare Gleitlagerung des Ventilelements 4 gegenüber dem Ventilsitz 2.

Die Wandabschnitte 10 sind vorzugsweise zumindest abschnittsweise zum Ventilelement 4 korrespondierend, komplementär dazu und/oder hohlzylinderabschnittförmig geformt.

Die Wandabschnitte 10 können durch eine Hülse bzw. einen Käfig 11 gebildet sein, die bzw. der mit dem Gehäuse 3 verbunden oder hierdurch gebildet ist, wie beispielhaft in den Explosionsdarstellungen in Fig. 3 gezeigt. Grundsätzlich sind jedoch auch andere Lösungen denkbar.

Die Wandabschnitte 10 sind im Darstellungsbeispiel mit dem Abstoßungsmagneten 9 verbunden, der den Ventilelementmagneten 8 des Ventilelements 4 abstößt.

Die Hülse bzw. der Käfig 11 weist im Darstellungsbeispiel mehrere Arme 12 auf, die - vorzugsweise parallel zur Führungsrichtung, die bevorzugt der Nord-Süd-Ausrichtung des Magnets 8, 9 bzw. der Magnete 8, 9bzw. der Mittelachse M entspricht - ausgerichtet sind und/oder die Wandabschnitte 10 bilden.

Hier sind jedoch auch andere Lösungen möglich, beispielsweise eine vollständig geschlossene Hülse mit einer umlaufenden Wand, die die Wandabschnitte 10 bildet. Die Wandabschnitte 10 müssen also nicht zwingend voneinander getrennt sein, sondern können vielmehr auch durch einen einstückig gebildeten Körper realisiert sein, soweit das Ventilelement 4 durch die Wandabschnitte 10 in seiner Bewegungsfreiheit so eingeschränkt ist, dass es linear geführt wird oder ist.

Der Einsatz des Käfigs 11 bietet den Vorteil, dass zwischen den Armen 12 mindestens ein Durchlass 13 gebildet ist, durch den Fluid entlang des Ventilelements 4 vom Einlass 6 zum Auslass 7 gelangen kann. Es versteht sich, dass zwischen den Wandabschnitten 10 mindestens ein Durchlass 13 auch auf andere Weise gebildet sein kann, beispielsweise durch eine oder mehrere Nuten oder Kanäle, auch ohne Hülse bzw. Käfig 11, auch wenn die konkrete Konstruktion in vorteilhafter Weise leicht zu montieren und gegebenenfalls zu warten und daher bevorzugt ist.

Das Ventilelement 4 ist vorzugsweise zumindest abschnittsweise als Rotationskörper bzw. zylindrisch gebildet. Im Darstellungsbeispiel ist das Ventilelement 4 aus einem zylinderförmigen Abschnitt 4A und einem bevorzugt zumindest teilweise konischen Dichtabschnitt 4B gebildet, der als Dichtfläche des Ventilelements 4 fungiert, die im geschlossenen Zustand des Rückschlagventils 1 zwecks Unterbrechung der Fluidverbindung 5 am korrespondierend bzw. komplementär geformten Ventilsitz 2 anliegt. Am zylinderförmigen Abschnitt 4A ist das Ventilelement 4 linear geführt.

Das Ventilelement 4 weist vorzugsweise auf der dem Dichtabschnitt 4B abgewandten Seite des Ventilelements 4 den Ventilelementmagneten 8 auf. Im Darstellungsbeispiel ist der Ventilelementmagnet 8 im Ventilelement 4 bzw. in dessen zylindrischen Abschnitt 4 - bevorzugt mittig, konzentrisch zum Querschnitt, zentral und/oder koaxial zur Zylinderform - befestigt, insbesondere versenkt.

Im Darstellungsbeispiel weist das Ventilelement 4 eine Aufnahme 14, insbesondere Vertiefung, beispielsweise Bohrung, auf, in der der Magnet 9 eingelassen und/oder - beispielsweise klemmend, allgemein kraftschlüssig, alternativ oder zusätzlich form- und/oder stoffschlüssig - befestigt ist.

Die Hülse bzw. der Käfig 11 kann in das Gehäuse 3 eingesetzt, insbesondere angeschraubt oder auf sonstige Weise befestigt sein, im Darstellungsbeispiel durch einen Formschluss, der mit einem Sprengring 15 bewirkt wird.

Der Abstoßungsmagnet 9 ist im Darstellungsbeispiel relativ zu den Wandabschnitten 10 festgelegt, während der Ventilelementmagnet 8 mit dem Ventilelement 4 so gekoppelt ist, dass die Abstoßungskraft der Magnete 8, 9 das Ventilelement 4 entlang der Wandabschnitte 10 in Richtung des Ventilsitzes 2 drückt.

Der Abstoßungsmagnet 9 ist vorzugsweise dem Ventilelementmagnet 8 in Führungsrichtung des Ventilelements 4 fluchtend und/oder entgegengesetzt polarisiert angeordnet. Hierdurch kann effiziente Abstoßung erreicht werden.

Im Darstellungsbeispiel weist der Käfig 11 bodenseitig eine mittige Aufnahme 16 auf, in der der Abstoßungsmagnet 9 - beispielsweise kraftschlüssig, alternativ oder zusätzlich form- und/oder stoffschlüssig - befestigt ist. So kann der Abstoßungsmagnet 9 an oder in der Hülse bzw. dem Käfig 11 und ganz besonders bevorzugt an oder in einem Boden 17 der Hülse bzw. des Käfigs 11 bevorzugt mittig befestigt sein.

Insbesondere ist der Abstoßungsmagnet 9 mittig zwischen den Wandabschnitten 10 bzw. Armen 12 angeordnet. Im Darstellungsbeispiel ist der Abstoßungsmagnet 9 im Bereich des Bodens 17 der Hülse und/oder des Käfigs 11 angeordnet, sodass die Abstoßungskraft das Ventilelement 4 aus der Hülse bzw. aus dem Käfig 11 drückt. Das Ventilelement 4 und der Ventilsitz 2 sind vorzugsweise koaxial zueinander angeordnet, gebildet und/oder zueinander bewegbar. Die Magnete 8, 9 sind vorzugsweise koaxial zu dem Ventilelement 4 und/oder dem Ventilsitz 2 angeordnet bzw. zueinander bewegbar.

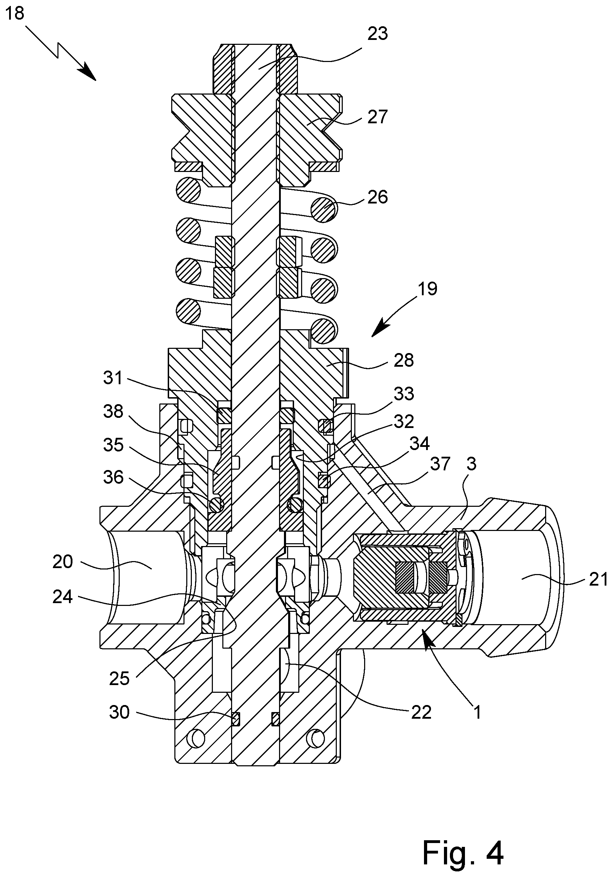

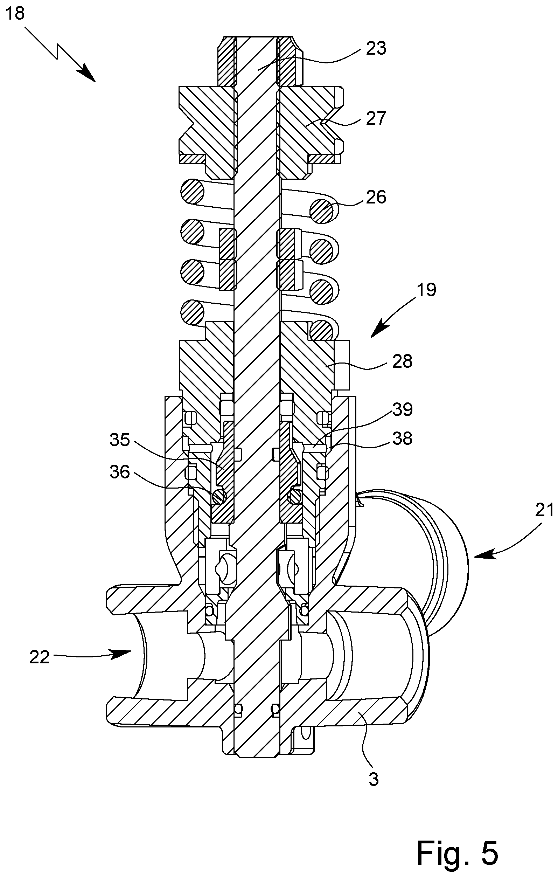

Fig. 4 zeigt einen Querschnitt und Fig. 5 einen weiteren Querschnitt einer vorschlagsgemäßen Ventilanordnung 18, die ein vorschlagsgemäßes Rückschlagventil 1 und ein Überdruckventil 19 aufweist.

Bei der vorschlagsgemäßen Ventilanordnung 18 handelt es sich vorzugsweise um ein sogenanntes Umlaufventil. Dieses ist dazu geeignet, an einem Pumpenanschluss 20 mit unter Druck stehender Reinigungsflüssigkeit versorgt zu werden und diese Reinigungsflüssigkeit in Flussrichtung durch das vorschlagsgemäße Rückschlagventil 1 zu einem Abgabeanschluss 21 zu leiten.

Zwischen dem Pumpenanschluss 20 und dem Abgabeanschluss 21 weist die Ventilanordnung 18 also das vorschlagsgemäße Rückschlagventil 1 auf. Das Rückschlagventil 1 ist so angeordnet und ausgebildet, dass das Rückschlagventil 1 einen Fluidfluss vom Puppenanschluss 20 zum Abgabeanschluss 21 ermöglicht und in umgekehrte Richtung blockiert. Hinsichtlich der Funktion des Rückschlagventils wird auf die vorherige Beschreibung basierend auf den Fig. 1 bis Fig. 3 verwiesen.

Das Überdruckventil 19 ist dazu ausgebildet, bei Erreichen einer bevorzugt einstellbaren Druckschwelle eine Passage zwischen dem Pumpenanschluss 20 und einem Bypass 22 zu öffnen.

Die Ventilanordnung 18 ist im Darstellungsbeispiel dazu geeignet, mittels des Überdruckventils 19 unter Druck stehende Reinigungsflüssigkeit über den Bypass 22 abzuführen, um einen zu hohen Staudruck zu verhindern.

Beispielsweise kann die Reinigungsflüssigkeit über den Bypass 22 in ein Vorratsgefäß (nicht dargestellt) zurückgeführt werden, aus dem eine Pumpe (nicht dargestellt) die Reinigungsflüssigkeit zum Pumpenanschluss 20 fördert.

Hierdurch kann eine Beschädigung von Komponenten durch einen zu hohen Druck vermieden werden und gleichzeitig steht stets der Ansprechdruck des Überdruckventils 19 für eine bedarfsweise Abgabe durch den Abgabeanschluss 21 bereit.

Letztlich ähnelt das Überdruckventil 19 einem Rückschlagventil, das bei Erreichen einer Druckschwelle selbsttätig öffnet und eine Passage zwischen dem Pumpenanschluss 20 und dem Bypass 22 öffnet.

Die vorschlagsgemäße Ventilanordnung 18 weist im Darstellungsbeispiel eine Verstellung 23 zur Einstellung des Anspechdrucks zur Öffnung des Überdruckventils 19 auf.

Das Überdruckventil 19 weist ein Ventilelement 24 auf, das gegen einen Ventilsitz 25 - vorzugsweise mittels der Verstellung 23 einstellbar - vorgespannt ist. Die Vorspannung wird im Darstellungsbeispiel über einen Spannelement 26, insbesondere eine Feder, in Schließrichtung bewirkt.

Über eine Stellschraube 27 - optional mit Kontermutter - lässt sich die Vorspannung einstellen. Hierzu komprimiert die Stellschraube 27 das Spannelement 26 und vergrößert hierdurch die Spannung, mit der das Ventilelement 24 gegen den Ventilsitz 25 verspannt wird oder ist . Das Spannelement 26 stützt sich im Darstellungsbeispiel an einem Gehäuseteil 28 ab, was aber auch anders realisiert werden kann.

Die Spannkraft des Spannelements 26 wird vorzugsweise über einen Ventilschaft 29 zum Ventilelement 24 geleitet, das als Ringskonus des Ventilschafts 29, optional einstückig mit diesem, gebildet ist. Der Ventilschaft 29 ist axial beweglich und vorzugsweise durch Dichtungen 30, 31 zur Umgebung hin abgedichtet.

Das Überdruckventil 19 weist vorzugsweise eine Zylinder-Kolben-Einheit auf. Sie ist dazu ausgebildet, basierend auf einer Druckdifferenz zwischen dem Puppenanschluss 20 und dem Abgabeanschluss 21 eine Kraft in Schließrichtung auf dasVentilelement 24 des Überdruckventils 18 auszuüben.

Die Zylinder-Kolben-Einheit ist vorzugsweise stromabwärts des Rückschlagventils 1 fluidisch mit dem Abgabeanschluss 21 gekoppelt.

Im Darstellungsbeispiel weist die Zylinder-Kolben-Einheit einen Zylinderraum 32 auf, der beispielsweise im Gehäuseteil 28 gebildet sein kann. Das Gehäuseteil 28 ist im Darstellungsbeispiel in das Gehäuse 3 eingeschraubt und/oder über eine oder mehrere Dichtebenen 33, 34 eingerichtet.

Die Zylinder-Kolben-Einheit weist ferner ein Kolbenelement 35 auf. Das Kolbenelement 35 ist - insbesondere kraft- und/oder formschlüssig - mit dem Ventilschaft 29 gekoppelt, um über den Ventilschaft 29 eine Öffnungs- und/oder Schließbewegung des Ventilelements 24 zu bewirken oder zu unterstützen.

Das Kolbenelement 35 ist im Zylinderraum 32 angeordnet und mit einer Kolbendichtung 36 gegenüber dem Zylinderraum 32 bewegbar abgedichtet. Das Kolbenelement 35 ist mit dem Ventilschaft 29 vorzugsweise so gekoppelt, insbesondere verbunden, dass ein Überdruck im Zylinderraum 32 eine Kraft auf den Ventilschaft 29 in eine Richtung bewirkt, die das Ventilelement 24 des Überdruckventils 19 von seinem Ventilsitz 25 abrückt und dadurch eine Öffnung zwischen dem Puppenanschluss 20 und dem Bypass 22 bewirkt oder unterstützt, und/oder bei Unterdruck im Zylinderraum 32 ein Schließen des Überdruckventils 19 bewirkt oder unterstützt.

Die Ventilanordnung 18 bzw. das Überdruckventil 19 weist vorzugsweise ferner einen Steuerkanal 37 auf, über den Reinigungsflüssigkeit - insbesondere vom Auslass 7 des Rückschlagventils 1, der vorliegend dem Abgabeanschluss 21 entspricht - in den Zylinderraum 32 geleitet werden kann.

Hierzu kann ein Ringraum 38 vorgesehen sein, über den der Steuerkanal 37 mit einem Durchbruch 39 des Gehäuseteils 28 kommuniziert, sodass der Zylinderraum 32 fluidisch mit dem Auslass 7 bzw. Abgabeanschluss 21 verbunden ist (vergleiche Fig. 5). Im Darstellungsbeispiel ist der Ringraum 38 über die Dichtebenen 33, 34 abgedichtet.

Das Überdruckventil 18 ist vorzugsweise stromauf des Rückschlagventils 1 angeordnet, insbesondere während der Steuerkanal 37 stromab des Rückschlagventils 1 mündet.

Wird der Druck durch Zufluss von Reinigungsflüssigkeit im Zylinderraum 32 erhöht, bewirkt oder unterstützt die resultierende Kraft des Kolbenelements 35 auf den Ventilschaft 29 die Öffnung des Überdruckventils 19. In diesem Fall liegt kein oder kaum oder negativer Druck in Flussrichtung über dem Rückschlagventil 1 an und so schließt das Rückschlagventil 1 oder ist geschlossen.

Bei geöffnetem Überdruckventil 19 und Druckabfall am Abgabeanschluss 21 bewirkt die Anordnung wiederum, dass der Druck im Zylinderraum 32 abfällt und ein Schließen des Überdruckventils 19 unterstützt bzw. beschleunigt wird. Gleichzeitig kann das Rückschlagventil 1 öffnen und den Fluidstrom zwischen dem Pumpenanschluss 20 und dem Abgabeanschluss 21 freigegeben.

In überraschender Weise hat sich der Einsatz des vorschlagsgemäßen Rückschlagventils 1 bei einer vorschlagsgemäßen Ventilanordnung 18 als in synergistischer Weise besonders vorteilhaft erwiesen.

Hintergrund ist hier insbesondere, dass die Stärke der magnetischen Abstoßung der Magnete 8, 9 nichtlinear vom Abstand der Magnete 8, 9 und damit vom Abstand des Ventilelements 4 vom Ventilsitz 2 abhängt.

Die Distanz zwischen den Magneten 8, 9 ist am größten, wenn das Rückschlagventil 1 geschlossen ist. Damit ist auch die Kraft, mit der das Ventilelement 4 in Richtung des Ventilsitzes 2 verspannt ist, in dieser Position am geringsten. Mit zunehmender Öffnung steigt die Abstoßungskraft überproportional an. In vorteilhafter Weise ermöglicht hingegen der nur leichte Gegendruck des Ventilelements 4 gegen den Ventilsitz 2 ein besonders leichtes anfängliches Öffnen des Rückschlagventils 1.

Bei der vorschlagsgemäßen Ventilanordnung 18 mit der Zylinder-Kolben-Einheit, die das Öffnen und Schließen des Überdruckventils 19 unterstützt, hat sich dieser Zusammenhang als besonders vorteilhaft für ein sanftes, geräuscharmes schließen des Überdruckventils 19 erwiesen, insbesondere wenn der Auslass 7 des Rückschlagventils 1 fluidisch mit dem Zylinderraum 32 gekoppelt ist.

Denn das widerstandsarme Öffnungsverhalten des Rückschlagventils 1 ermöglicht es, insbesondere bei Druckschwankungen niedriger Amplituden und/oder hoher Frequenzen, diese Druckschwankungen teilweise durch Fluidstrom durch das sich öffnende Rückschlagventil 1 zu kompensieren, sodass diese nur gedämpft in den Zylinderraum 32 gelangen. Dies beugt harten Ventilschließungen bzw. Klappern vor. Ein Aufschwingen der gesamten Ventilanordnung 18 wird hierdurch vermieden oder jedenfalls reduziert.

Das schnell ansprechende Rückschlagventil 1 ist in diesem Zusammenhang also nicht nur selbst besonders robust durch Vermeidung einer Rückstellfeder oder sonstigen mechanischen Spannelements, sondern in synergistischer Weise auch einer geräuscharmen, sanften und letztlich auch verschleißarmen Betriebsweise des Überdruckventils 19 zuträglich. Denn das Ventilelement 24 wird durch Einsatz des vorschlagsgemäßen Rückschlagventils 1 weniger abrupt in die Schließstellung bewegt und daher aufgrund des eingesetzten vorschlagsgemäßen Rückschlagventils 1 ebenfalls geschont. Denn Verschleiß im Bereich des Ventilelements 24 und des Ventilsitzes 25 des Überdruckventils 19 können durch Einsatz des vorschlagsgemäßen Rückschlagventils 1 reduziert werden.

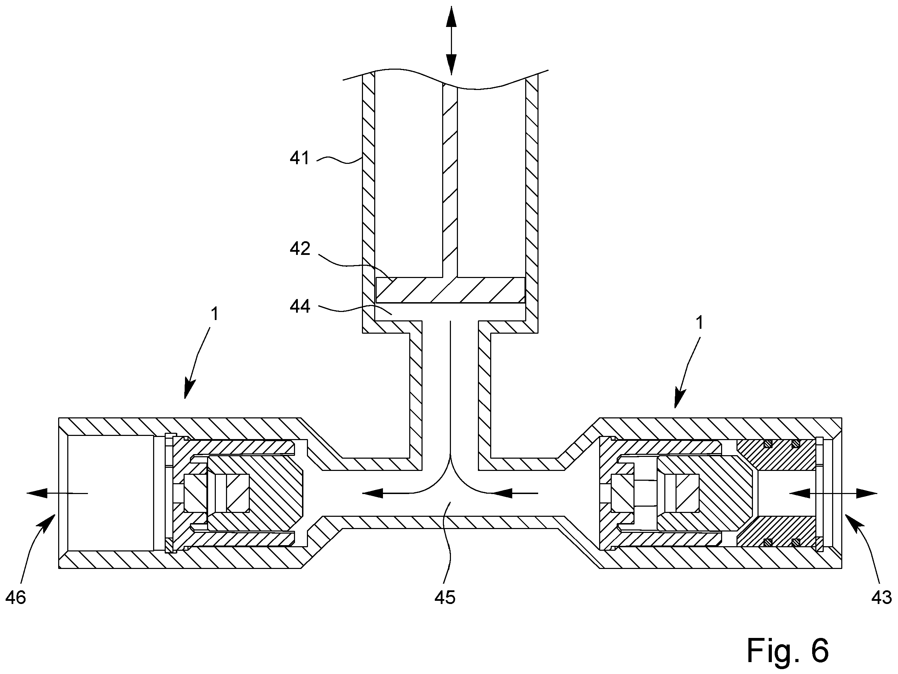

Fig. 6 zeigt ein schematisches Blockschaltbild eines vorschlagsgemäßen Hydrauliksystems 40. Bei dem Hydrauliksystem 40 handelt es sich vorzugsweise um ein Wasserhydrauliksystem. Das Hydrauliksystem 40 weist ein vorschlagsgemäßes Rückschlagventil 1 auf. Im Darstellungsbeispiel ist eine Pumpenanordnung als Beispiel für das vorschlagsgemäße Hydrauliksystem 40 dargestellt.

Grundsätzlich kann das vorschlagsgemäße Hydrauliksystem 40 alternativ oder zusätzlich die vorschlagsgemäße Ventilanordnung 18 aufweisen. Beispielsweise kann das Hydrauliksystem 40 die oder eine andere Pumpe sein oder aufweisen, die mit dem Pumpenanschluss 20 der Ventilanordnung 18 fluidisch verbunden ist und hierdurch die Ventilanordnung 18 mit Fluid, insbesondere Reinigungsflüssigkeit, versorgt.

In besonders vorteilhafter Weise können sowohl die Pumpenanordnung als auch die Ventilanordnung 18 ein oder mehrere vorschlagsgemäße Rückschlagventile 1 aufweisen. Im Folgenden wird das Hydrauliksystem 40 gemäß des Darstellungsbeispiels aus Fig. 6 näher erläutert.

Das vorschlagsgemäße Hydrauliksystem 40 weist vorzugsweise einen durch das vorschlagsgemäße Rückschlagventil 1 geleiteten Fluidstrom auf, der Druckschwankungen oder Druckwellen mit Frequenzen oberhalb von 1 kHz aufweist. Alternativ oder zusätzlich ist das Hydrauliksystem 40 dazu ausgebildet, das vorschlagsgemäße Rückschlagventil 1 mit einem Fluidstrom zu versorgen, der in Schwingung versetzt wird oder ist mit Frequenzen, die 100 Hz, 200 Hz oder 500 Hz, vorzugsweise 1 kHz, insbesondere 2 oder 3 kHz, überschreiten.

Ein auch unabhängig realisierbarer Aspekt der vorliegenden Erfindung betrifft ein vorschlagsgemäßes Rückschlagventil 1, eine vorschlagsgemäße Ventilanordnung 18 und/oder ein vorschlagsgemäßes Hydrauliksystem 40, das/die zum Steuern von Fluidströmen verwendet wird oder mit einer Pumpe oder sonstigen hydraulischen Einrichtung gekoppelt ist, in der Schwingungen bzw. Druckschwankungen/Druckspitzen mit Frequenzen oberhalb von 500 Hz, vorzugsweise 1 kHz, insbesondere 2 oder 3 kHz, vorliegen oder erzeugt werden.

Beispielsweise kann das Hydrauliksystem 40 bzw. eine Pumpe wie eine Kolbenpumpe das Fluid in Schwindung mit einer Periodendauer von weniger als 10 ms, vorzugsweise weniger als 5 ms, insbesondere weniger als 2 ms oder 1 ms versetzen.

Im Darstellungsbeispiel gemäß Fig. 6 handelt es sich bei dem Hydrauliksystem 40 um eine Hydraulikpumpe, die mit einem oder mehreren, im Darstellungsbeispiel zwei Rückschlagventilen 1 realisiert ist.

Das Hydrauliksystem 40 weist im Darstellungsbeispiel eine Zylinder-Kolben-Einheit mit einem Zylinder 41 und einem Kolben 42 auf. Durch Bewegung des Kolbens 42 im Zylinder 41 in eine Richtung, sodass ein zwischen Zylinder 41 und Kolben 42 gebildeter Innenraum 44 vergrößert wird (wie im Darstellungsbeispiel durch einen Doppelpfeil angedeutet), wird Fluid von einem Einlass 43 des Hydrauliksystems 40 durch ein erstes vorschlagsgemäßes Rückschlagventil 1 und durch einen Zwischentrakt 46 in den Innenraum 44 des Zylinders 41 angesaugt.

Im Anschluss wird der Kolben 42 in die entgegengesetzte Richtung bewegt, wodurch der Innenraum 44 verkleinert und das Fluid unter Überdruck gesetzt wird. Der Innenraum 44 ist über den Zwischentrakt 45 nicht nur mit einem Auslass 7 des ersten Rückschlagventils 1 verbunden, sondern auch mit einem Einlass 6 eines weiteren Rückschlagventils 1, das durch den entstehenden Überdruck öffnet, sodass das unter Druck stehende Fluid durch das weitere Rückschlagventil 1 hindurch zu einem Auslass 46 des Hydrauliksystems 40 strömt.

Das Hydrauliksystem 40 gemäß des Ausführungsbeispiels aus Fig. 6 weist (nur) einen Kolben 42 auf. Grundsätzlich sind jedoch auch andere Hydrauliksysteme und insbesondere Pumpen oder Pumpen aufweisende Anordnungen mit mindestens einem und/oder höchstens zwei Kolben 42 besonders vorteilhaft in Zusammenhang mit dem Einsatz des vorschlagsgemäßen Rückschlagventils 1.

Der oder die Kolben 42, bewirkt/bewirken vorzugsweise, dass in einer ersten Phase Fluid unter Abrücken des Ventilelements 4 vom Ventilsitz 2 durch ein vorschlagsgemäßes Rückschlagventil 1 bewegt wird und das Ventilelement 4 in einer nachfolgenden zweiten Phase durch die Abstoßungskraft der Magnete 8, 9 in den oder in Richtung des Ventilsitzes 2 gedrückt wird. Dies gilt im Darstellungsbeispiel letztlich für beide Rückschlagventile 1, jedoch mit vertauschten Phasen, sodass immer nur eines der Rückschlagventile 1 geöffnet und nur eines der Rückschlagventile 1 geschlossen ist.

Der oder die Kolben 42 kann/können also Fluid in der ersten Phase durch ein vorschlagsgemäßes Rückschlagventil 1 hindurch ansaugen und/oder in der zweiten Phase Fluid durch ein (anderes) vorschlagsgemäßes Rückschlagventil 1 hindurchdrücken. Dies erfolgt vorzugsweise hochfrequent. Besonders bevorzugt bzw. besonders vorteilhaft im Zusammenhang mit der Verwendung des oder der vorschlagsgemäßen Rückschlagventile 1 hat sich hierbei eine Betriebsmodus erwiesen, bei dem eine Summe der Dauer der ersten und der Dauer der zweiten Phase weniger als 10 ms, vorzugsweise weniger als 5 ms, insbesondere weniger als 2 ms oder 1 ms, beträgt.

Weitere Aspekte der vorliegenden Erfindung, die einzeln und miteinander sowie mit den zuvor erläuterten Aspekten kombiniert werden können, betreffen:
1. Rückschlagventil 1 aufweisend einen Ventilsitz 2, ein Ventilelement 4 und zwei Magnete 8, 9, wobei die Magnete 8, 9 so angeordnet sind, dass eine Abstoßungskraft der Magnete 8, 9 in Richtung des Ventilsitzes 2 auf das Ventilelement 4 wirkt.
2. Rückschlagventil nach Aspekt 1, dadurch gekennzeichnet, dass die Abstoßungskraft das Ventilelement 4 entgegen einer Flussrichtung des Rückschlagventils 1 in Richtung des Ventilsitzes 2 drückt.
3. Rückschlagventil nach Aspekt 1 oder 2, dadurch gekennzeichnet, dass die Magnete 8, 9 das Ventilelement 4 in einem druckausgeglichenen Zustand des Rückschlagventils 1 gegen den Ventilsitz 2 verspannen.
4. Rückschlagventil nach einem der voranstehenden Aspekte, dadurch gekennzeichnet, dass das Rückschlagventil 1 federfrei ist und/oder nur die Magnete 8, 9 das Ventilelement 4 in Schließrichtung vorspannen.
5. Rückschlagventil nach einem der voranstehenden Aspekte, dadurch gekennzeichnet, dass mindestens einer, bevorzugt beide, der Magnete 8, 9 Permanentmagnete sind.
6. Rückschlagventil nach einem der voranstehenden Aspekte, dadurch gekennzeichnet, dass mindestens einer, bevorzugt beide, der Magnete 8, 9 Neodymmagnete sind.
7. Rückschlagventil nach einem der voranstehenden Aspekte, dadurch gekennzeichnet, dass die Magnete 8, 9 koaxial zueinander und/oder zu einer Mittelachse M bzw. Rotationssymmetrieachse des Ventilelements 4 und/oder Ventilsitzes 2 angeordnet sind.
8. Rückschlagventil nach einem der voranstehenden Aspekte, dadurch gekennzeichnet, dass mindestens einer, bevorzugt beide, der Magnete 8, 9, korrosionsgeschützt bzw. bevorzugt vollständig, mit einem Polymer, insbesondere PTFE, oder Epoxid beschichtet oder ummantelt ist/sind.
9. Rückschlagventil nach einem der voranstehenden Aspekte, dadurch gekennzeichnet, dass das Ventilelement 4 linear bzw. rein translatorisch geführt ist.
10. Rückschlagventil nach einem der voranstehenden Aspekte, dadurch gekennzeichnet, dass die Beweglichkeit der Magnete 8, 9 zueinander, vorzugsweise durch eine Gleitlagerung, auf eine lineare bzw. translatorische Bewegung beschränkt ist.
11. Rückschlagventil nach einem der voranstehenden Aspekte, dadurch gekennzeichnet, dass das vorzugsweise zumindest abschnittsweise als Rotationskörper bzw. zylindrisch gebildete Ventilelement 4 durch vorzugsweise zumindest abschnittsweise korrespondierende, komplementär dazu geformte und/oder hohlzylinderabschnittförmige Wandabschnitte 10 linear geführt ist.
12. Rückschlagventil nach Anspruch 11, dadurch gekennzeichnet, dass einer der Magnete 8, 9 relativ zu den Wandabschnitten 10 festgelegt ist und der andere der Magnete 8, 9 mit dem Ventilelement 4 so gekoppelt ist, dass die Abstoßungskraft der Magnete 8, 9 das Ventilelement 4 entlang der Wandabschnitte 10 in Richtung des Ventilsitzes 2 drückt.
13. Rückschlagventil nach Aspekt 11 oder 12, dadurch gekennzeichnet, dass das Ventilelement 4 in einer Hülse und/oder einem Käfig 11 linear geführt ist bzw. die Wandabschnitte 10 durch die Hülse bzw. den Käfig 11 gebildet sind.
14. Rückschlagventil nach Aspekt 13, dadurch gekennzeichnet, dass einer der Magnete 8, 9 im Bereich eines Bodens 17 der Hülse und/oder des Käfigs 11 angeordnet ist, sodass die Abstoßungskraft das Ventilelement 4 aus der Hülse bzw. aus dem Käfig 11 drückt.
15. Rückschlagventil nach einem der voranstehenden Aspekte, dadurch gekennzeichnet, dass das Ventilelement 4 und der Ventilsitz 2 koaxial zueinander angeordnet, gebildet und/oder zueinander bewegbar sind.
16. Rückschlagventil nach einem der voranstehenden Aspekte, dadurch gekennzeichnet, dass die Magnete 8, 9 koaxial zu dem Ventilelement 4 und/oder dem Ventilsitz 2 angeordnet bzw. zueinander bewegbar sind
17. Ventilanordnung 18 aufweisend ein Rückschlagventil (1 nach einem der Aspekte 1 bis 16 und ein Überdruckventil 19.
18. Ventilanordnung nach Aspekt 17, dadurch gekennzeichnet, dass die Ventilanordnung 18 einen Pumpenanschluss 20 und einen Abgabeanschluss 21 aufweist, zwischen denen das Rückschlagventil 1 so angeordnet ist, dass das Rückschlagventil 1 einen Fluidfluss vom Puppenanschluss 20 zum Abgabeanschluss 21 ermöglicht und in umgekehrte Richtung blockiert, und dass das Überdruckventil 19 bei Erreichen einer bevorzugt einstellbaren Druckschwelle eine Passage zwischen dem Pumpenanschluss 20 und einem Bypass 22 öffnet.
19. Ventilanordnung nach Aspekt 18, dadurch gekennzeichnet, dass das Überdruckventil 19 stromauf des Rückschlagventils 1 angeordnet ist.
20. Ventilanordnung nach Aspekt 18 oder 19, dadurch gekennzeichnet, dass das Überdruckventil 19 eine Zylinder-Kolben-Einheit aufweist, die stromabwärts des Rückschlagventils 1 fluidisch mit dem Abgabeanschluss 21 gekoppelt und dazu ausgebildet ist, basierend auf einer Druckdifferenz zwischen dem Puppenanschluss 20 und dem Abgabeanschluss 21 eine Kraft in Schließrichtung auf ein Ventilelement 24 des Überdruckventils 19 auszuüben.
21. Hydrauliksystem 40, vorzugsweise Wasserhydrauliksystem, mit einem Rückschlagventil 1 gemäß einem der Ansprüche 1 bis 16 oder einer Ventilanordnung 18 nach einem der Aspekte 17 bis 20.
22. Hydrauliksystem nach Aspekt 21, dadurch gekennzeichnet, dass das Hydrauliksystem 40 einen durch das Rückschlagventil 1 geleiteten Fluidstrom aufweist, der Druckschwankungen oder Druckwellen mit Frequenzen oberhalb von 100 Hz oder 200 Hz, vorzugsweise 500 Hz, insbesondere 1 kHz oder 2 kHz aufweist.
23. Hydrauliksystem nach Aspekt 21 oder 22, dadurch gekennzeichnet, dass das Hydrauliksystem 40 eine Hydraulikpumpe aufweist oder mit dem Rückschlagventil 1 bildet.
24. Hydrauliksystem nach Aspekte 23, dadurch gekennzeichnet, dass die Hydraulikpumpe mindestens einen und/oder höchstens zwei Kolben 42 aufweist, der oder die in einer ersten Phase Fluid unter Abrücken des Ventilelements 4 vom Ventilsitz 2 durch das Rückschlagventil 1 drücken und wobei das Ventilelement 4 in einer nachfolgenden zweiten Phase durch die Abstoßungskraft in den oder in Richtung des Ventilsitzes 2 gedrückt wird
25. Hydrauliksystem nach Aspekt 24, dadurch gekennzeichnet, dass eine Summe der Dauer der ersten und der Dauer der zweiten Phase weniger als 10 ms, vorzugsweise weniger als 5 ms, insbesondere weniger als 2 ms oder 1 ms, beträgt.
26. Hydrauliksystem nach einem der Aspekte 21 bis 25, dadurch gekennzeichnet, dass die Hydraulikpumpe zwei Rückschlagventile 1 aufweist, von denen vorzugsweise mindestens ein Rückschlagventil 1 gemäß einem der Ansprüche 1 bis 16 ausgebildet ist, insbesondere wobei beide Rückschlagventile 1 gemäß einem der Ansprüche 1 bis 16 ausgebildet sind, und wobei die Hydraulikpumpe vorzugsweise an eine Ventilanordnung gemäß einem der Ansprüche 17 bis 20 angeschlossen ist.

Unterschiedliche Aspekte der vorliegenden Erfindung können jeweils unabhängig voneinander und in unterschiedlichen Kombinationen realisiert werden und vorteilhaft sein, auch wenn von einer Erläuterung jeder möglichen Kombination aus Übersichtlichkeitsgründen abgesehen worden ist.

### Bezugszeichenliste:

- 1.: Rückschlagventil
- 2.: Ventilsitz
- 3.: Gehäuse
- 4.: Ventilelement
- 4A: zylindrischer Abschnitt
- 4B: Dichtabschnitt
- 5.: Fluidpassage
- 6.: Einlass
- 7.: Auslass
- 8.: Magnet (Ventilelement)
- 9.: Magnet
- 10.: Wandabschnitte
- 11.: Käfig
- 12: . Arme
- 13.: Durchlass
- 14.: Aufnahme
- 15.: Sprengring
- 16.: Aufnahme
- 17.: Boden
- 18.: Ventilanordnung
- 19.: Überdruckventil
- 20.: Pumpenanschluss
- 21.: Abgabeanschluss
- 22.: Bypass
- 23.: Verstellung
- 24.: Ventilelement
- 25.: Ventilsitz
- 26.: Spannelement
- 27.: Stellschraube
- 28.: Gehäuseteil
- 29.: Ventilschaft
- 30.: Dichtung
- 31.: Dichtung
- 32.: Zylinderraum
- 33.: Dichtebene
- 34.: Dichtebene
- 35.: Kolbenelement
- 36.: Kolbendichtung
- 37.: Steuerkanal
- 38.: Ringsraum
- 39.: Durchbruch
- 40.: Hydrauliksystem
- 41.: Zylinder
- 42.: Kolben
- 43.: Einlass
- 44.: Innenraum
- 45.: Auslass
- M: Mittelachse

## Patentansprüche

1. Rückschlagventil (1) aufweisend einen Ventilsitz (2), ein Ventilelement (4) und zwei Magnete (8, 9), wobei die Magnete (8, 9) so angeordnet sind, dass eine Abstoßungskraft der Magnete (8, 9) in Richtung des Ventilsitzes (2) auf das Ventilelement (4) wirkt.

2. Rückschlagventil nach Anspruch 1, **dadurch gekennzeichnet, dass** die Abstoßungskraft das Ventilelement (4) entgegen einer Flussrichtung des Rückschlagventils (1) in Richtung des Ventilsitzes (2) drückt und/oder die Magnete (8, 9) das Ventilelement (4) in einem druckausgeglichenen Zustand des Rückschlagventils (1) gegen den Ventilsitz (2) verspannen.

3. Rückschlagventil nach einem der voranstehenden Ansprüche, **dadurch gekennzeichnet, dass** das Rückschlagventil (1) federfrei ist und/oder nur die Magnete (8, 9) das Ventilelement (4) in Schließrichtung vorspannen.

4. Rückschlagventil nach einem der voranstehenden Ansprüche, **dadurch gekennzeichnet, dass** mindestens einer, bevorzugt beide, der Magnete (8, 9) Permanentmagnete, bevorzugt Neodymmagnete, sind; und/oder
mindestens einer, bevorzugt beide, der Magnete (8, 9), korrosionsgeschützt bzw. bevorzugt vollständig, mit einem Polymer, insbesondere PTFE, oder Epoxid beschichtet oder ummantelt ist/sind.

5. Rückschlagventil nach einem der voranstehenden Ansprüche, **dadurch gekennzeichnet, dass** die Magnete (8, 9) koaxial zueinander und/oder zu einer Mittelachse (M) bzw. Rotationssymmetrieachse des Ventilelements (4) und/oder Ventilsitzes (2) angeordnet sind.

6. Rückschlagventil nach einem der voranstehenden Ansprüche, **dadurch gekennzeichnet, dass** das Ventilelement (4) linear bzw. rein translatorisch geführt ist; und/oder die Beweglichkeit der Magnete (8, 9) zueinander, vorzugsweise durch eine Gleitlagerung, auf eine lineare bzw. translatorische Bewegung beschränkt ist.

7. Rückschlagventil nach einem der voranstehenden Ansprüche, **dadurch gekennzeichnet, dass** das vorzugsweise zumindest abschnittsweise als Rotationskörper bzw. zylindrisch gebildete Ventilelement (4) durch vorzugsweise zumindest abschnittsweise korrespondierende, komplementär dazu geformte und/oder hohlzylinderabschnittförmige Wandabschnitte (10) linear geführt ist, vorzugsweise:
(a) wobei einer der Magnete (8, 9) relativ zu den Wandabschnitten (10) festgelegt ist und der andere der Magnete (8, 9) mit dem Ventilelement (4) so gekoppelt ist, dass die Abstoßungskraft der Magnete (8, 9) das Ventilelement (4) entlang der Wandabschnitte (10) in Richtung des Ventilsitzes (2) drückt; und/oder
(b) wobei das Ventilelement (4) in einer Hülse und/oder einem Käfig (11) linear geführt ist bzw. die Wandabschnitte (10) durch die Hülse bzw. den Käfig (11) gebildet sind, insbesondere wobei einer der Magnete (8, 9) im Bereich eines Bodens (17) der Hülse und/oder des Käfigs (11) angeordnet ist, sodass die Abstoßungskraft das Ventilelement (4) aus der Hülse bzw. aus dem Käfig (11) drückt.

8. Rückschlagventil nach einem der voranstehenden Ansprüche, **dadurch gekennzeichnet, dass** das Ventilelement (4) und der Ventilsitz (2) koaxial zueinander angeordnet, gebildet und/oder zueinander bewegbar sind; und/oder dass die Magnete (8, 9) koaxial zu dem Ventilelement (4) und/oder dem Ventilsitz (2) angeordnet bzw. zueinander bewegbar sind.

9. Ventilanordnung (18) aufweisend ein Rückschlagventil (1) nach einem der Ansprüche 1 bis 16 und ein Überdruckventil (19), vorzugsweise wobei die Ventilanordnung (18) einen Pumpenanschluss (20) und einen Abgabeanschluss (21) aufweist, zwischen denen das Rückschlagventil (1) so angeordnet ist, dass das Rückschlagventil (1) einen Fluidfluss vom Puppenanschluss (20) zum Abgabeanschluss (21) ermöglicht und in umgekehrte Richtung blockiert, und dass das Überdruckventil (19) bei Erreichen einer bevorzugt einstellbaren Druckschwelle eine Passage zwischen dem Pumpenanschluss (20) und einem Bypass (22) öffnet.

10. Ventilanordnung nach Anspruch 9, **dadurch gekennzeichnet, dass** das Überdruckventil (19) stromauf des Rückschlagventils (1) angeordnet ist; und/oder
das Überdruckventil (19) eine Zylinder-Kolben-Einheit aufweist, die stromabwärts des Rückschlagventils (1) fluidisch mit dem Abgabeanschluss (21) gekoppelt und dazu ausgebildet ist, basierend auf einer Druckdifferenz zwischen dem Puppenanschluss (20) und dem Abgabeanschluss (21) eine Kraft in Schließrichtung auf ein Ventilelement (24) des Überdruckventils (19) auszuüben.

11. Hydrauliksystem (40), vorzugsweise Wasserhydrauliksystem, mit einem Rückschlagventil (1) gemäß einem der Ansprüche 1 bis 8 oder einer Ventilanordnung (18) nach einem der Ansprüche 9 oder 10.

12. Hydrauliksystem nach Anspruch 11, **dadurch gekennzeichnet, dass** das Hydrauliksystem (40) einen durch das Rückschlagventil (1) geleiteten Fluidstrom aufweist, der Druckschwankungen oder Druckwellen mit Frequenzen oberhalb von 100 Hz oder 200 Hz, vorzugsweise 500 Hz, insbesondere 1 kHz oder 2 kHz aufweist.

13. Hydrauliksystem nach Anspruch 11 oder 12, **dadurch gekennzeichnet, dass** das Hydrauliksystem (40) eine Hydraulikpumpe aufweist oder mit dem Rückschlagventil (1) bildet, vorzugsweise wobei die Hydraulikpumpe mindestens einen und/oder höchstens zwei Kolben (42) aufweist, der oder die in einer ersten Phase Fluid unter Abrücken des Ventilelements (4) vom Ventilsitz (2) durch das Rückschlagventil (1) drücken und wobei das Ventilelement (4) in einer nachfolgenden zweiten Phase durch die Abstoßungskraft in den oder in Richtung des Ventilsitzes (2) gedrückt wird

14. Hydrauliksystem nach Anspruch 13, **dadurch gekennzeichnet, dass** eine Summe der Dauer der ersten und der Dauer der zweiten Phase weniger als 10 ms, vorzugsweise weniger als 5 ms, insbesondere weniger als 2 ms oder 1 ms, beträgt.

15. Hydrauliksystem nach einem der Ansprüche 11 bis 14, **dadurch gekennzeichnet, dass** die Hydraulikpumpe zwei Rückschlagventile (1) aufweist, von denen vorzugsweise mindestens ein Rückschlagventil (1) gemäß einem der Ansprüche 1 bis 8 ausgebildet ist, insbesondere wobei beide Rückschlagventile (1) gemäß einem der Ansprüche 1 bis 8 ausgebildet sind, und wobei die Hydraulikpumpe vorzugsweise an eine Ventilanordnung gemäß einem der Ansprüche 9 oder 10 angeschlossen ist.
